# EUROPEAN PATENT APPLICATION

(11) **EP 4 678 480 A1**
(43) Date of publication of application: **14.01.2026**
(21) Application number: 23926436.9
(22) Date of filing: 21.11.2023
(51) Int. Cl.: B60R 16/02, H02H 3/24, H02H 7/18, H02J 7/00, H04B 3/54

(54) **POWER DISTRIBUTION DEVICE AND WIRE-DISCONNECT DETERMINATION METHOD**

(30) Priority: 08.03.2023 JP 2023035724
(71) Applicant: Astemo, Ltd., Chiyoda-ku, Tokyo 1000004 (JP)
(72) Inventor: NAKANO, Hiroshi, Tokyo 100-8280 (JP); KANEKAWA, Nobuyasu, Tokyo 100-8280 (JP); JUMONJI, Kentaro, Chiyoda-ku, Tokyo 100-0004 (JP)
(74) Representative: Strehl & Partner mbB
(86) International application number: PCT/JP2023/041794
(87) International publication number: WO 2024/185230

(57) **Abstract**

A power distribution device receives supply of power from a main power line along at least two paths, and supplies the power to a vehicle load, the power distribution device including: a current detection element for detecting current in the main power line; and an examination current control unit that controls, in accordance with an operating state of the vehicle load, an amount of current flowing in a path other than a path to the vehicle load.

## Description

### Incorporation by Reference

This application claims priority to Japanese Patent Application No. 2023-35724 filed on March 8, 2023, the contents of which are incorporated herein by reference.

### Technical Field

The present invention relates to a power distribution device provided onboard a vehicle, and in particular, relates to a detection of a failure in power supply paths.

### Background Art

In recent years, with the advancement in electrification and automatic driving of automobiles, there is a demand for improved reliability (redundancy) of in-vehicle power networks, while there also is a demand for reducing or improving the efficiency in the wire harnesses for supplying power. Widely used in conventional in-vehicle power networks is a configuration in which a relay box or a fuse box is provided near a battery, and the power cables are radially laid to connect to each of the sensors and actuators in the vehicle. In such an in-vehicle power network, the number of mounted sensors and actuators have increased with the advancements of electrification and improvement in the reliability of in-vehicle devices, and the number of wire harnesses has also increased to ensure the redundancy of the power supply.

As a background art of this technical field, the following conventional technology is known. PTL 1 (JP 2016-54617 A) discloses a power supply system including: one or more monitoring devices each of which monitors the condition of a power storage unit receiving supply of power via a ring-like power line formed of power lines that are connected in a ring-like shape; and a control device that controls the monitoring devices. The control device includes: a first power line forming a part of the ring-like power line; a second power line connected to a power source and to the first power line; a switching unit being switched to supply or to interrupt the power from the power source; and a control unit for controlling the switching unit so as to detect abnormality in the ring-like power line or abnormality in the monitoring devices. Each of the monitoring devices is provided with a third power line forming a part of the ring-like power line; and a fourth power line for supplying power to a load that is included in the monitoring device and connected to the third power line.

### Summary of Invention

### Technical Problem

PTL 1 described above discloses a power supply system using a ring-like power network in which monitoring devices are connected in a ring-like shape, and the presence of a wire disconnect in the ring-like power network is determined by providing a switching unit switched to supply power or to interrupt the power, and by collecting the condition of the power supply from each of the monitoring devices connected to the ring-like power network, while the ring-like connection is temporarily cut off. In PTL 1, because the ring-like connection is temporarily cut off during a diagnosis of a wire disconnect, the power supply to a part of the ring-like power network may be interrupted. Therefore, the wire-disconnect detection in the power supply network in PTL 1 can be executed only while the vehicle is parked.

When a wire disconnect occurs in a part of the ring-like power network while the vehicle is traveling, the current path concentrates on a specific section of the paths capable of supplying power, and the current may exceed the acceptable current level of the ring-like power network. Therefore, in an in-vehicle power network requiring high reliability, it is necessary to detect a wire disconnect within a short time period while the vehicle is traveling, to restrict the operation of onboard devices to a range where the safety can be ensured depending on the section where the wire disconnect has occurred, and to restrict power supply to such devices.

For this purpose, provided is a technology for detecting a wire disconnect in an in-vehicle power network in a short time period without interrupting the power supply, even while the vehicle is traveling.

### Solution to Problem

A representative example of the invention disclosed in the present application is as follows. That is, a power distribution device that receives supply of power from a main power line along at least two paths, and supplies the power to a vehicle load, the power distribution device including: a current detection element for detecting current in the main power line; and an examination current control unit that controls, in accordance with an operating state of the vehicle load, an amount of current flowing in a path other than a path to the vehicle load.

### Advantageous Effects of Invention

According to one aspect of the present invention, a wire disconnect in an in-vehicle power network can be detected in a short time period, without interrupting the power supply, even while the vehicle is traveling. Problems, configurations, and advantageous effects other than those explained above will become clear from the following description of the embodiments.

### Brief Description of Drawings

[FIG. 1A] FIG. 1A is a diagram illustrating an example of an in-vehicle power network according to an embodiment of the present invention.
[FIG. 1B] FIG. 1B is a diagram illustrating an example of the in-vehicle power network according to the embodiment of the present invention.
[FIG. 1C] FIG. 1C is a diagram illustrating an example of the in-vehicle power network according to the embodiment of the present invention.
[FIG. 2] FIG. 2 is a diagram illustrating a configuration of a power distribution device 1a according to a first embodiment.
[FIG. 3A] FIG. 3A is a diagram illustrating current paths inside the power distribution device and a current change in a main power line, resultant of an operation of a determination unit of the first embodiment.
[FIG. 3B] FIG. 3B is a diagram illustrating current paths inside the power distribution device and a current change in the main power line, resultant of the operation of the determination unit of the first embodiment.
[FIG. 4] FIG. 4 is a time chart of load current IL, examination current ID, and main line current IM according to a first embodiment.
[FIG. 5] FIG. 5 is a time chart of load current IL, examination current ID, and main line current IM according to a second embodiment.
[FIG. 6] FIG. 6 is a diagram illustrating a failure diagnosis method according to a third embodiment.
[FIG. 7] FIG. 7 is a diagram illustrating a configuration example of a power distribution device 1a according to a fourth embodiment.
[FIG. 8] FIG. 8 is a diagram illustrating minimum currents of loads A to E.

### Description of Embodiments

Some embodiments of the present invention will now be explained with reference to drawings.

### (First embodiment)

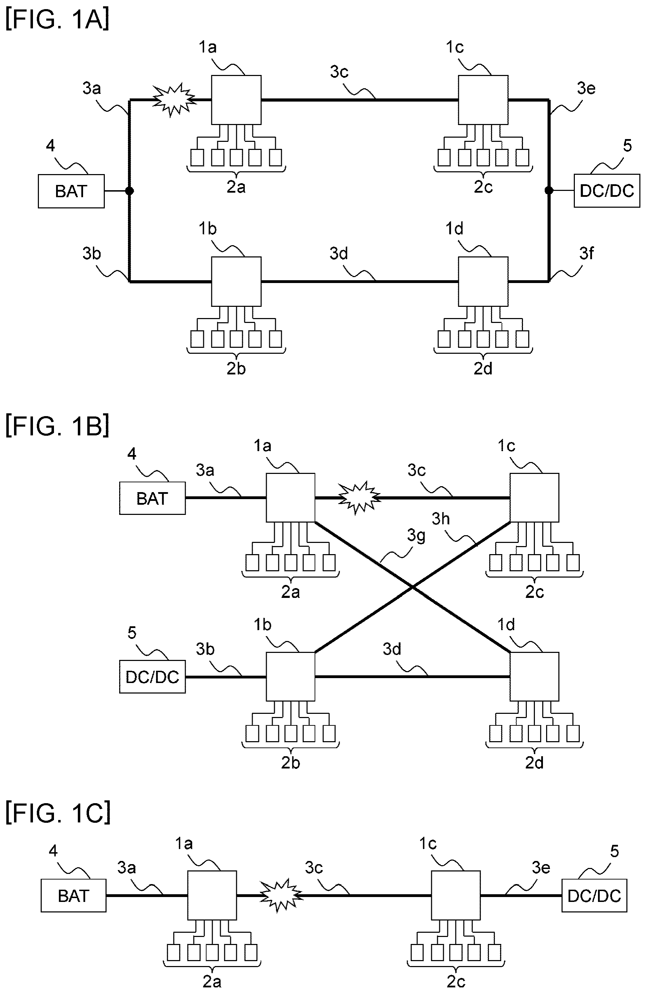

FIGS. 1A, 1B, and 1C are diagrams illustrating an example of an in-vehicle power network according to the present embodiment.

The in-vehicle power network illustrated in FIG. 1A includes a plurality of power distribution devices 1a to 1d. The power distribution devices 1a to 1d are power source hubs installed in respective zones such as the front, right, left, and rear zones of the vehicle, and supplying power to the vehicle loads 2a to 2d in the respective zones. The power distribution devices 1a to 1d are connected in a ring-like shape via main power lines 3a, 3b, 3c, 3d, 3e, and 3f, and power is supplied to each of the power distribution devices 1a to 1d via the plurality of main power lines. A 12 V battery 4 as a first power source is connected to the main power lines 3a and 3b that are connected in a ring-like shape. As the battery 4, a lead battery, a nickel hydrogen battery, a lithium ion battery, or the like may be used. A DC/DC converter 5 as a second power source is connected to the main power lines 3e and 3f. The DC/DC converter 5 steps down the voltage of a high-voltage battery (e.g., 400 V battery), not illustrated, to 12 V, and supplies the resultant voltage to the main power lines 3e and 3f. The high-voltage battery is a battery that supplies power to a driving motor for driving wheels, on an electric vehicle or a hybrid vehicle. Instead of the DC/DC converter 5, an alternator that generates power using the driving force of the engine of the vehicle may be connected to the main power lines 3e and 3f. That is, any kind of power sources may be selected as the first power source and the second power source, as appropriate, as long as the power sources supply power from different energy sources.

In the in-vehicle power network illustrated in FIG. 1A, because the main power lines are connected in a ring-like shape, all of the power distribution devices 1a to 1d receive power supply via the two systems, and even when any of the main power lines experiences a wire disconnect, power supply to the power distribution devices 1a to 1d can be continued via another route. For example, when a wire disconnect occurs in the main power line 3a in FIG. 1A, the power of the battery 4 can be supplied to the power distribution device 1a via the main power lines 3b, 3d, 3f, 3e, and 3c. When the remaining charge of the battery 4 is low, the DC/DC converter 5 can supply power to the power distribution device 1a via the main power lines 3e and 3c.

In the in-vehicle power network illustrated in FIG. 1B, the power system including the main power lines 3a and 3c connecting from the battery 4 is connected to the power distribution devices 1a and 1c, and the power system including the main power lines 3b and 3d connecting from the DC/DC converter 5 is connected to the power distribution devices 1b and 1d. The power distribution device 1a and the power distribution device 1d are connected via a main power line 3g, and the power distribution device 1c and the power distribution device 1b are connected via a main power line 3h. As described above, because the main power line 3g and the main power line 3h diagonally connect the power system from the battery 4 and the power system from the DC/DC converter 5, all of the power distribution devices 1a to 1d can receive power supply via these two systems, and even when a wire disconnect occurs in any of the main power lines, the power supply to the power distribution devices 1a to 1d can be continued using another route. For example, when a wire disconnect occurs in the main power line 3c in FIG. 1B, the power supply from the battery 4 to the power distribution device 1c stops, but power can be supplied to the power distribution device 1c from the DC/DC converter 5 via the main power lines 3b and 3h.

In the in-vehicle power network illustrated in FIG. 1C, the power system including the main power line 3a from the battery 4 is connected to the power distribution device 1a, the power system including the main power line 3e from the DC/DC converter 5 is connected to the power distribution device 1c, and the power distribution device 1a and the power distribution device 1c are connected via the main power line 3c. In this manner, because the power system from the battery 4 and the power system from the DC/DC converter 5 are connected via the main power line 3c, all of the power distribution devices 1a and 1c can receive the power supply via two systems, and even when a wire disconnect occurs in any of the main power lines, the power supply to the power distribution devices 1a and 1c can be continued via another route. For example, when a wire disconnect occurs in the main power line 3c in FIG. 1C, the power supply from the DC/DC converter 5 to the power distribution device 1a stops, but power can be supplied to the power distribution device 1a from the battery 4 via the main power line 3a. In addition, although power supply from the battery 4 to the power distribution device 1c is interrupted, power can be supplied from the DC/DC converter 5 via the main power line 3e.

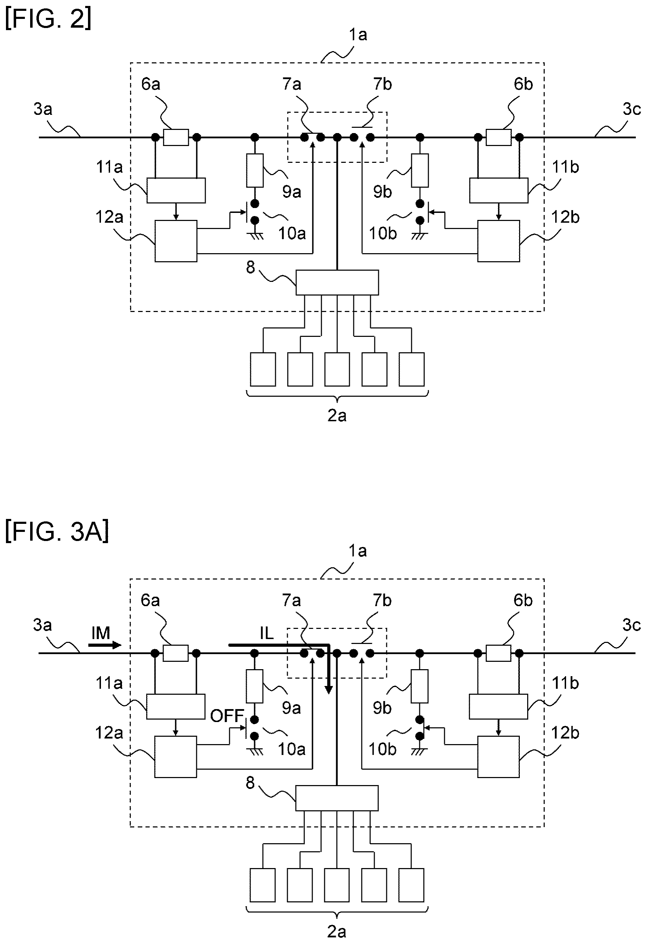

FIG. 2 is a diagram illustrating a configuration of the power distribution device 1a according to the present embodiment. A configuration example of the power distribution device 1a will be described with reference to FIG. 2, but the other power distribution devices 1b, 1c, and 1d may have the same configuration.

The power distribution device 1a is connected to the main power line 3a and the main power line 3c. The power distribution device 1a includes a current detection element 6a that detects a current flowing through the main power line 3a and a current detection element 6b that detects current in the main power line 3c. As the current detection elements 6a and 6b, shunt resistors, Hall elements, or the like may be used. The main power line 3a and the main power line 3c are connected via breaker elements 7a and 7b. One end of the breaker element 7a is connected to the main power line 3a, and the other end is connected to the breaker element 7b. One end of the breaker element 7b is connected to the breaker element 7a, and the other end is connected to the main power line 3c. A protection circuit 8 is connected to the connection point between the breaker element 7a and the breaker element 7b, and power is supplied to vehicle loads 2a via the protection circuit 8. The protection circuit 8 has a protection function of interrupting power supply when overcurrent or overvoltage for each of the vehicle loads 2a is detected, in addition to operating to switch to conduct and interrupt the power supply by controlling the current to each of the vehicle loads 2a. The breaker elements 7a, 7b are preferably power MOSFETs, and may be mechanical switches such as relays.

In the configuration described above, an examination current load 9a, as an examination current control unit, and an examination current switch 10a are connected between the current detection element 6a and the breaker element 7b. As the examination current load 9a, an element capable of adjusting the amount of current flowing to the ground using a resistor or the like may be selected. The examination current switch 10a may be an element, such as a semiconductor switch (e.g., MOS-FET), that operates to switch to conduct and to interrupt the current flowing through a circuit.

When a shunt resistor is used as the current detection element 6a, the power distribution device 1a includes a current detection unit 11a and a determination unit 12a. The current detection unit 11a detects the current flowing through the main power line 3a, from the voltage between both ends of the current detection element 6a. The determination unit 12a controls to open and to close the examination current switch 10a and the breaker element 7a, on the basis of the value of the current detected by the current detection unit 11a. The determination unit 12 may use a method of comparing the current value with a predetermined threshold using a comparator, or a method of determining the current value digitally converted by the current detection unit 11a using a microcomputer.

The configuration on the side of the main power line 3c is the same as that described above, and the power distribution device 1a includes an examination current load 9b, an examination current switch 10b, a current detection unit 11b, and a determination unit 12b. The determination unit 12b controls to open and to close the breaker element 7b and the examination current switch 10b, on the basis of the current flowing through the main power line 3c.

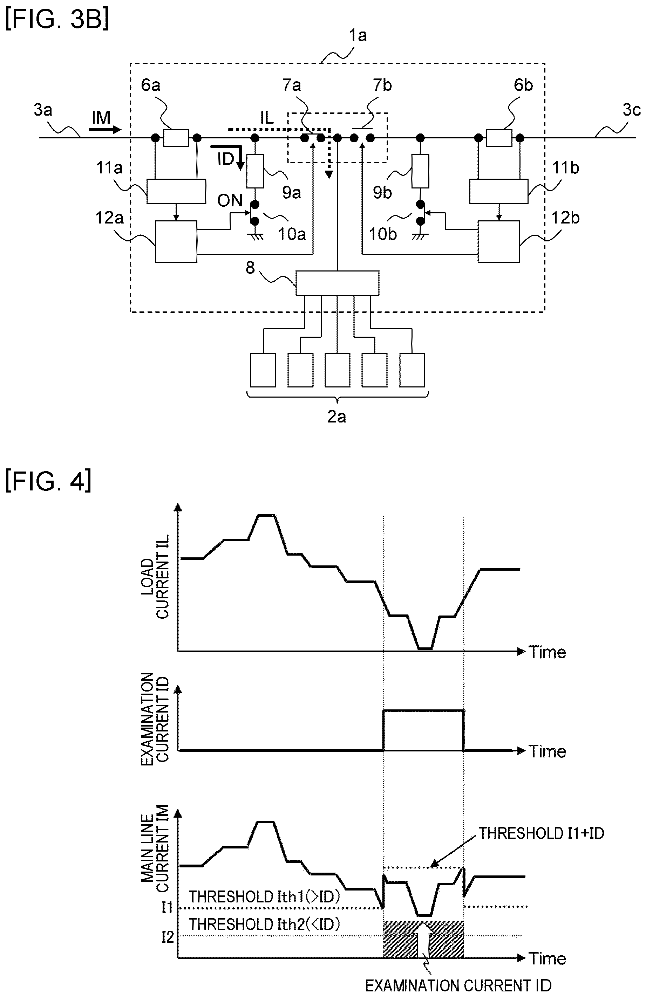

FIGS. 3A and 3B are diagrams illustrating the current paths inside the power distribution device 1a and a change in the current in the main power line 3a, resultant of the operation of the determination unit 12a.

FIG. 3A illustrates the current path when the power is supplied from the side of the main power line 3a to the vehicle loads 2a connected to the power distribution device 1a. When the vehicle loads 2a are operating and consuming current, load current IL flows through the vehicle loads 2a. When the power is being supplied from the main power line 3a, main line current IM in the main power line 3a is substantially equal to the load current IL. If a wire disconnect then occurs in the main power line 3a, the current detected by the current detection element 6a drops to zero, and the determination unit 12a determines the presence of the wire disconnect in the main power line 3a, and trips the breaker element 7a to cut off the main power line 3a.

If the current is being consumed by the vehicle loads 2a, as in the example described above, the presence of a wire disconnect can be determined on the basis of the current flowing through the main power line 3a. However, when the vehicle loads 2a is not operating, or when the vehicle loads 2a are in standby and the load current IL is very low, the determination may become erroneous. That is, when the main line current IM is very low, it is difficult to determine whether the vehicle loads 2a have been stopped, or a wire disconnect has occurred in the main power line 3a.

To address this issue, as illustrated in FIG. 3B, when the main line current IM falls below a predetermined current value, the examination current switch 10a conducts and passes examination current ID to increase the main line current IM. In other words, the examination current switch 10a can pass the examination current ID on the basis of the operating state of the vehicle loads 2a, the operating state being based on the result of monitoring the main line current IM. If the main power line 3a is normal, main line current IM equal to or higher than the examination current ID keeps flowing through the main power line 3a. If a wire disconnect then occurs in the main power line 3a, the current detected by the current detection element 6a drops to zero, so that the determination unit 12a determines that a wire disconnect has occurred in the main power line 3a. The breaker element 7a is then tripped to cut off the main power line 3a, and the breaker element 7b is closed, so that the power supply is switched to the power supply from the main power line 3c.

In addition, with the configuration described above, it is possible to notify a host system of wire-disconnect information detected by the power distribution device 1a, and to limit the operations of the vehicle loads 2a to the minimum load necessary to ensure the safety, or to limit the order of the operations and the loads to be operated at the same time in accordance with priority and the current capacities of the vehicle loads 2a. As a result, it is possible to prevent excessive current from flowing through the not faulty main power line, among those connected in the ring-like shape, and to prevent damage caused by heating of the cable forming the main power line. In addition, with such a limiting function, because it is possible to suppress the current flowing through the main power line even at the time of a failure, it is not necessary to design a power cable assuming a worst case, so that the cost and weight of the power cable can be reduced.

FIG. 4 is a time chart of the load current IL, the examination current ID, and the main line current IM.

When the load current IL decreases and the main line current IM falls below a first threshold Ith1 (= I1), the determination unit 12a causes the examination current switch 10a to close so as to pass the examination current ID. The main line current IM is a value obtained by taking the sum of the load current IL and the examination current ID. When the examination current switch 10a becomes conductive, the determination unit 12a updates the first threshold Ith1 to a value obtained by adding ID to I1 (I1 + ID). That is, the first threshold Ith1 is set higher than the examination current ID when the examination current ID is passed through the examination current load 9a. As a result, it is possible to suppress oscillations caused by the examination current switch 10a being opened and closed repeatedly, as the examination current is switched ON and OFF. If the load current IL then increases and the main line current IM becomes higher than the first threshold Ith1 having been reset (= I1 + ID), the examination current switch 10a is switched OFF to stop the examination current. At this time, by providing a second threshold Ith2 lower than the first threshold Ith1 and lower than the examination current ID, when the main line current IM drops lower than the second threshold Ith2, it is determined that a wire disconnect has occurred, and the main power line 3a is cut off by opening the breaker element 7a. That is, the examination current ID is set to a value higher than the second threshold Ith2, which is the threshold for determining the presence of a wire disconnect. By setting the thresholds in the manner described above, it is possible to make an accurate determination of the presence of a wire disconnect. The determination unit 12a and the determination unit 12b adjust the timings at which examination current switches 10a, 10b are operated in such a manner that examination current switches 10a, 10b are closed at different timings.

According to the embodiment described above, unlike the conventional technology, it is possible to avoid interruption of power supply, caused by the switching operation for cutting off the ring connection. In addition, in the wire-disconnect detection method for monitoring the current in the main power line, a wire disconnect state can be detected quickly and accurately, without being affected by whether the vehicle loads 2a are ON or OFF or the loads are high or low.

Furthermore, according to the present embodiment, because it is not necessary to keep the examination current flowing all the time, the vehicle loads 2a can be reduced, and the examination current is passed only when the main line current drops, so that the power consumption for the wire-disconnect detection can be suppressed.

It is also possible to determine not only the presence of a wire disconnect but also the point of the wire disconnect in the in-vehicle power network.

In the present embodiment, the examination current control unit including the examination current load 9a and the examination current switch 10a is provided, but the examination current control unit is not limited to such a configuration. For example, the examination current control unit may be implemented as switching of a semiconductor element or as current control using a constant current circuit. It is also possible to connect a processor element such as a microcomputer or an IC as a load, and the amount of current may be controlled through processing executed by the processor element.

### (Second embodiment)

In a second embodiment, a more preferable method for controlling the examination current for suppressing the current consumption will be described.

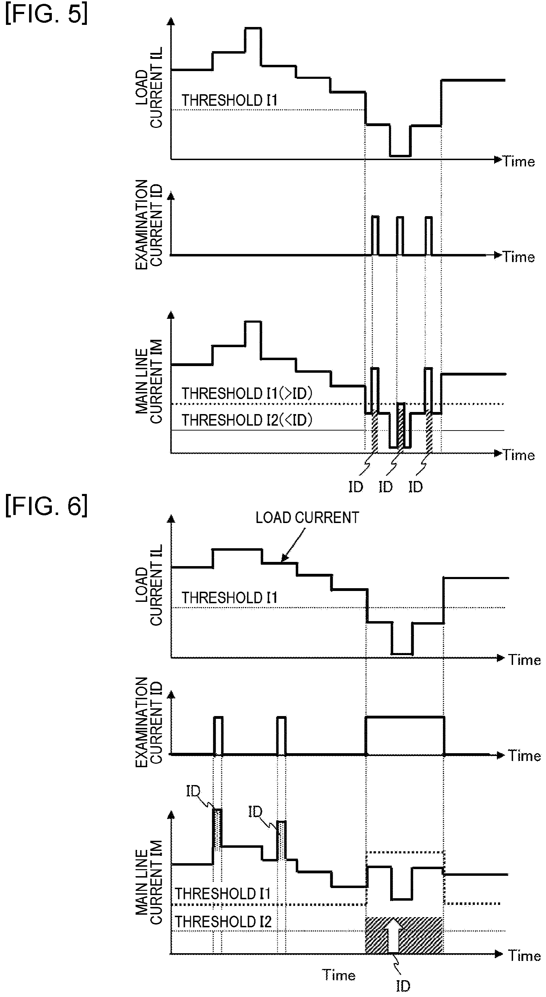

FIG. 5 is a time chart of the load current IL, the examination current ID, and the main line current IM.

When the load current IL becomes lower and the main line current IM falls below the first threshold Ith1 (= I1), the determination unit 12a causes the examination current switch 10a to perform an operation of switching ON and OFF repeatedly, so that pulsed examination current ID is passed. The main line current IM is a value obtained by taking the sum of the load current IL and the pulsed examination current ID. If the main line current IM drops below the second threshold Ith2 while the examination current switch 10a is conducting, the determination unit 12a determines that a wire disconnect has occurred. When the load current IL then increases and the main line current IM becomes higher than the first threshold Ith1, the ON/OFF operation of the examination current switch 10a is stopped. With this configuration, too, by providing the second threshold Ith2 that is lower than the examination current ID, and when the main line current IM drops below the second threshold Ith2, it is determined that a wire disconnect has occurred. That is, the examination current ID is set to a value higher than the second threshold Ith2, which is the threshold for determining the presence of a wire disconnect. By setting the thresholds in the manner described above, it is possible to make an accurate determination of the presence of a wire disconnect.

In the second embodiment, the timing at which a diagnosis of the wire disconnect is performed when the load current IL becomes lower is dependent on the cycle of the ON/OFF operation of the examination current switch 10a. In other words, the timing of the wire-disconnect detection may be delayed by time corresponding to 1/2 cycle of the ON/OFF operation of the examination current switch 10a. Therefore, this configuration is effective in suppressing the consumption of the power charged in the battery 4 while the vehicle is parked and the vehicle is in a state where the timing requirement of the wire-disconnect detection is less demanding, such as while the ignition key is OFF, for example.

According to the second embodiment, because pulsed examination current is applied, power consumed in making a diagnosis of a wire disconnect can be suppressed.

### (Third embodiment)

In a third embodiment, a configuration for improving the reliability of the wire-disconnect detection will be described. A wire-disconnect detection function according to the third embodiment includes the examination current load 9a, the examination current switch 10a, and the determination unit 12a.

FIG. 6 is a diagram illustrating a failure diagnosis method according to the third embodiment.

While the vehicle loads 2a are in operation and the main line current IM is equal to or higher than the first threshold Ith1 (= I1), the examination current switch 10a is caused to open and close repeatedly (e.g., at predetermined time intervals) so that predetermined examination current ID is passed through the examination current load 9a, and it is determined whether the current detection element 6a is detecting a change in the main line current IM. In this manner, it is possible to make a diagnosis of a failure in the examination current load 9a and the examination current switch 10a.

With the configuration according to the third embodiment, when a change in the main line current IM cannot be observed even if the examination current switch 10a is opened and closed, it is determined that some part implementing the wire-disconnect detection has failed, and the power supply from the main power line 3a is prohibited. As a result, it is possible to avoid a non-detection state due to a failure in the wire-disconnect detection function, and it is possible to suppress interruptions of power supply.

The failure diagnosis for the examination current load 9a and the examination current switch 10a according to the third embodiment is applicable not only to the first embodiment but also to the second embodiment.

### (Fourth embodiment)

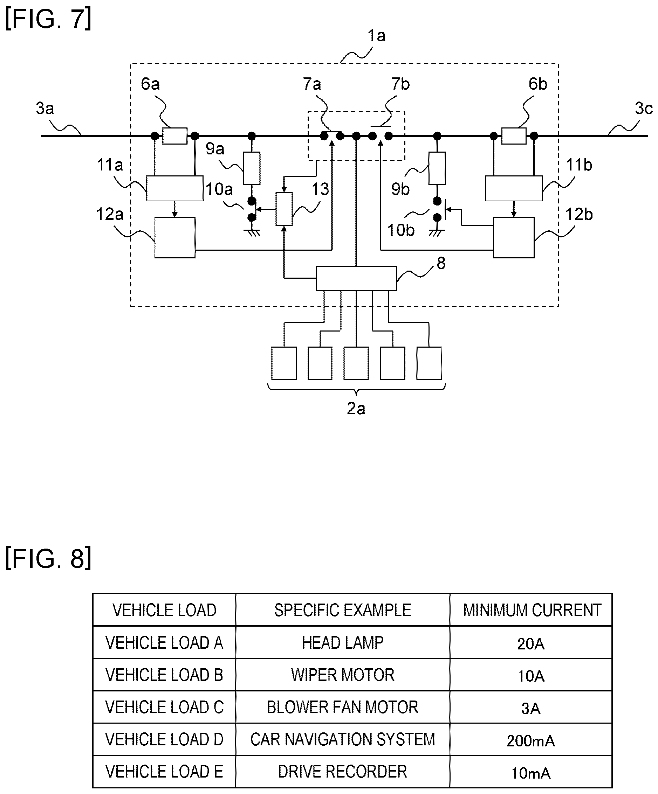

FIG. 7 is a diagram illustrating a configuration example of a power distribution device 1a according to a fourth embodiment. The fourth embodiment is different from the embodiments described above in that the opening and closing of the examination current switch 10a are controlled on the basis of operation information of the vehicle loads 2a or the states of the breaker elements 7a and 7b.

The protection circuit 8 acquires operation information indicating whether each of loads A to E of the vehicle loads 2a is in operation, using a switch for controlling the ON/OFF operation of the vehicle load 2a or a current sensor for detecting the current flowing through each of the loads. It is possible to obtain an estimation of the load current by using the operation information acquired by the protection circuit 8. For example, the minimum currents of the respective loads A to E in the front zone of the vehicle illustrated in FIG. 8 are stored in the switch control device 13 in the power distribution device 1a, and the examination current switch 10a is opened and closed depending on whether the sum of the minimum load currents of the respective vehicle loads that are in operation is equal to or less than the first threshold Ith1. It is also determined that the breaker element 7a is conducting, and that the load current is being supplied from the main power line 3a. The switch control device 13 may be configured as a microcomputer, for example.

For example, assuming that the current threshold for determining the presence of a wire disconnect is 100 mA, if currently only the drive recorder is in operation, it would be determined that there is a wire disconnect without application of the examination current. Therefore, the examination current switch 10a is closed so that the examination current is applied to the examination current load 9a.

According to the fourth embodiment, it is possible to keep passing the main line current IM having a predetermined value or higher, all the time, as long as the main power line 3a is normal, and the presence of a wire disconnect can be determined by monitoring the current detected by the current detection element 6a. In other words, because the examination current is controlled on the basis of the operating state of the vehicle loads 2a, the presence of a wire disconnect can be determined by monitoring the currents detected by the current detection elements 6a and 6b, regardless of whether the loads are in operation.

As described above, with the power distribution device according to the present embodiment, when the current flowing through the connected main power line drops to zero, or becomes equal to or lower than the predetermined threshold, it is possible to determine that there is a wire disconnect, and thus, it is possible to detect the presence of a wire disconnect of the in-vehicle power network in a short time period, without interrupting the power supply even while the vehicle is traveling, and to identify the point of wire disconnect.

Furthermore, because the examination current switches 10a and 10b are controlled on the basis of the operating state of the vehicle loads 2a, it is possible to suppress current consumption for the examination current.

Note that the present invention is not limited to the embodiments described above, and includes various modifications and configurations equivalent thereto, within the gist of the appended claims. For example, the embodiments described above are detailed descriptions provided for the purpose of explaining the present invention in an easy-to-understand manner, and the present invention is not necessarily limited to the configurations having all the elements described above. A part of the configuration according to one embodiment may be replaced with the configuration according to another embodiment. Furthermore, the configuration according to another embodiment may be added to the configuration according to one embodiment. In addition, another configuration may be added to, deleted from, and replaced with a part of the configuration according to each of the embodiments.

In addition, a part or all of the above-described configurations, functions, processing units, processing means, and the like may be implemented as hardware by designing an integrated circuit, for example, or may be implemented as software using a processor interpreting and executing a program for implementing each function.

Information such as a program, a table, and a file for implementing each of the functions may be stored in a recording device such as a memory, a hard disk, and a solid state drive (SSD), or a recording medium such as an IC card, an SD card, and a digital versatile disk (DVD).

In addition, control lines and information lines presented are those considered to be necessary for the explanation, and are not necessarily the representations of all of the control lines and the information lines required in implementations. In reality, almost all of the configurations are considered to be connected to one another.

## Claims

1. A power distribution device that receives supply of power from a main power line along at least two paths, and supplies the power to a vehicle load, the power distribution device comprising:
a current detection element for detecting current in the main power line; and
an examination current control unit that controls, in accordance with an operating state of the vehicle load, an amount of current flowing in a path other than a path to the vehicle load.

2. The power distribution device according to claim 1, wherein
the examination current control unit includes an examination current load provided on a path other than the path to the vehicle load, and
the examination current control unit is configured to control an amount of examination current flowing through the examination current load in accordance with the operating state of the vehicle load.

3. The power distribution device according to claim 2, wherein the examination current control unit includes a switch that opens and closes a current path to the examination current load.

4. The power distribution device according to claim 1, wherein the examination current control unit controls to pass current through a path other than the path to the vehicle load when current flowing through the vehicle load is lower than a predetermined threshold.

5. The power distribution device according to claim 1, wherein
predetermined examination current is passed through the path other than the path to the vehicle load when the current in the main power line becomes equal to or lower than a first threshold,
when the current in the main power line is lower than a second threshold, a determination that the main power line is experiencing a wire disconnect is made, and
the second threshold is lower than the first threshold.

6. The power distribution device according to claim 5, wherein
when the predetermined examination current is passed through the path other than the path to the vehicle load, the examination current control unit sets a value of the first threshold higher than a value of the examination current, and
the value of the examination current is set higher than a value of the second threshold.

7. The power distribution device according to claim 5, wherein
the examination current is pulsed current, and
the examination current control unit determines that the main power line is experiencing a wire disconnect when the current in the main power line is lower than the second threshold at timing at which the examination current that is pulsed is passed.

8. The power distribution device according to claim 7, wherein the examination current control unit switches the examination current to the pulsed current when the vehicle is parked.

9. The power distribution device according to claim 5, wherein
the examination current control unit is configured:
to pass current having a predetermined value through the path other than the path to the vehicle load when the current in the main power line is higher than the first threshold; and
to make a diagnosis of a failure of the examination current control unit based on a change in main line current flowing through the current detection element at a timing at which the current having the predetermined value is passed.

10. A wire-disconnect determination method in a power distribution device
that receives supply of power from a main power line along at least two paths, and supplies the power to a vehicle load, and
that includes:
a current detection element for detecting current in the main power line; and
an examination current control unit that controls, in accordance with an operating state of the vehicle load, an amount of current flowing in a path other than a path to the vehicle load,
the wire-disconnect determination method comprising:
causing the examination current control unit to pass predetermined examination current through the path other than the path to the vehicle load when the current in the main power line becomes equal to or lower than a first threshold; and
causing the examination current control unit to determine that the main power line is experiencing a wire disconnect when the current in the main power line is lower than a second threshold while the predetermined examination current is being passed.
